# EUROPEAN PATENT SPECIFICATION

(11) **EP 2 295 936 B1**
(45) Date of publication and mention of the grant of the patent: **09.05.2018**
(21) Application number: 10251288.6
(22) Date of filing: 20.07.2010
(51) Int. Cl.: G01C 21/36

(54) **Navigation system and methods regarding disputed territories**
Navigationssystem und Verfahren in Bezug auf umstrittene Landschaften
Système de navigation et procédés liés à des territoires contestés

(30) Priority: 15.09.2009 US 559752; 15.09.2009 US 559723
(43) Date of publication of application: 16.03.2011
(73) Proprietor: HERE Global B.V., 5611 ZT Eindhoven (NL)
(72) Inventor: Weiland, Michael L., Gurnee, IL 60031-1039 (US); Painter, Jeffrey, Sugar Grove, Il 60554 (US); Dembski, Michael P., Elmhurst, IL 60126 (US); Tielens, Bart, 4191 TP Geldermalsen (NL)
(74) Representative: Potter Clarkson LLP

(56) References cited:
- EP-A1- 2 553 394
- EP-A2- 1 327 857
- WO-A1-2008/140067

## Description

### BACKGROUND OF THE INVENTION

The present invention relates to collecting, storing, and/or using geographic data and, more particularly, to providing geographic or navigation data corresponding to disputed territories.

The use of maps and geographic information are prevalent in today's society. For example, geographic data may be used to navigate to a desired destination, to view an area of interest, to find specific points-of-interest ("POIs"), to educate oneself or others about regions and countries, and/or used for other purposes. Maps and geographic data thereof may be presented in a variety of formats and technologies.

For example, navigation systems or devices may provide useful displays of geographic areas. Navigation devices use map or geographic data, including navigation-related attributes, to provide features, such as map display and map guidance. A navigation device may provide guidance and display for a variety of regions, such as for a city, a state, a country, as well as areas between or including two or more countries.

However, a geographic area may be viewed or recognized differently by separate or different entities. City, state, province, and/or country boundaries or borders as well as associated geographic features or POIs may be in dispute. For example, a country may be represented on a geographic or navigation device having borders or features recognized by one country or entity, but another country or entity may dispute those borders or features and recognize different borders or features. Complexities may arise if one uses the navigation device in both countries or in a country or region that disputes the presentation of the geographic data. Accordingly, systems, methods, and/or techniques to address disputed territories, such as in regards to navigation systems, may be useful.

WO2008140067 A1 discloses an in-vehicle map display apparatus including (i) a universal map data storage unit configured to store universal map data that are independent of countries, (ii) a country-specific map data storage unit configured to store country-specific map data provided for and reflecting views of the respective countries, (iii) a destination country determining unit configured to determine a destination country of a vehicle, (iv) a data obtaining unit configured to obtain the universal map data from the universal map data storage unit and to obtain the country-specific map data corresponding to the destination country determined by the destination country determining unit from the country-specific map data storage unit, and (v) a map displaying unit configured to display a map on a display based on the universal map data and the country-specific map data obtained by the data obtaining unit.

EP1327857 A2 discloses a method involving selecting a language and outputting a location name in the selected language. The selected language is compared with a stored speech attribute of a location name and the name is output in the form allocated to the attribute associated with the selected language.

EO2553394 A1 discloses that when information related to a first country selected through an information terminal is received, a server control portion of a management server classifies other countries besides the first country into a first group and a second group. If information related to a second country included in the first group is subsequently received from the information terminal, the server control portion generates common map data that includes the first country and the second country, and controls such that the common map data is transmitted to the information terminal.

### SUMMARY OF THE INVENTION

According to an aspect of the invention, there is provided a computer-implemented method as claimed in claim 1, a navigation device as claimed in claim 6 and a computer program as claimed in claim 14.

According to an aspect of the invention, there is provided a computer-implemented method of operating a navigation system to provide different options in viewing disputed territories, the method comprising:
receiving a request for representing a first geographic entity, the first geographic entity associated with an area disputed between the first geographic entity and a second geographic entity;
providing a first option to view the first geographic entity with a first location for a boundary between the first geographic entity and the second geographic entity as recognized by the first geographic entity and not recognized by the second geographic entity, providing a second option to view the first geographic entity with a second location for the boundary as recognized by the second geographic entity and not recognized by the first geographic entity;
providing a third option to view the first geographic entity with a third location for the boundary as recognized by a third party, the third location for the boundary being different from the first and second locations for the boundary;
providing a fourth option to view the first geographic entity with the first location for the boundary, the second location for the boundary and the third location for the boundary; obtaining respective data records corresponding to the first, second and/or third location for the boundary from a geographic database depending on whether the first, second, third or fourth option is selected; and
providing the obtained data records for map display.

In one embodiment, obtaining the data records corresponding to the first, second and/or third location for the boundary is based on an attribute or feature type associated with the data records, the attribute or feature type indicating that a respective data record represents part of a border disputed between the first geographic entity and the second geographic entity.

In one embodiment, the first geographic entity comprises a first country and the second geographic entity comprises a second country.

In one embodiment, the first geographic entity comprises a first state or province and the second geographic entity comprises a second state or province.

The third party may comprise an international body or forum.

According to an aspect of the invention, there is provided a computer-implemented method of operating a navigation system to provide views of disputed territories, the method comprising:
providing, in a geographic database, a data record corresponding to a geographic area disputed between a first geographic entity and a second geographic entity, the data record associated with an indication of dispute;
retrieving the data record from the geographic database as a function of the indication of dispute to generate a representation of the first geographic entity that is not recognized by the second geographic entity; and
displaying the representation of the first geographic entity.

The data record may comprise a link data record.

The data record may represent a polygon.

In one embodiment, the method further comprises:
retrieving the data record from the geographic database as a function of the indication of dispute to generate a representation of the second geographic entity that is not recognized by the first geographic entity; and
displaying the representation of the second geographic entity.

In one embodiment, the method further comprises:
providing, in the geographic database, another data record corresponding to the geographic area disputed between a first geographic entity and a second geographic entity, the other data record associated with the indication of dispute;
retrieving the other data record from the geographic database as a function of the indication of dispute to generate a representation of the second geographic entity that is not recognized by the first geographic entity; and
displaying the representation of the second geographic entity.

In one embodiment, the method further comprises:
excluding data records that represent a border accepted by a third party from the data representation of the first geographic entity, the data records that represent the border accepted by a third party include respective attributes indicating dispute.

The data record may comprise a point of interest.

In one embodiment, the retrieving the data record to generate the data representation of the first geographic entity that is not recognized by the second geographic entity is based on a real world location of a device used to display the graphical representation.

In one embodiment, retrieving the data record to generate the data representation of the first geographic entity that is not recognized by the second geographic entity occurs after receiving a user selection to view the first geographic entity as such.

According to an aspect of the invention, there is provided a navigation device for providing different options in viewing disputed territories, the device comprising:
a user interface configured to display a geographic area;
a processor in communication with the user interface; and
a geographic database in communication with the processor, the geographic database including geographic data records representing at least part of a disputed area between a first geographic entity and a second geographic entity, the geographic data records comprising:
   (i) a first geographic data record corresponding to a first location for a boundary between the first geographic entity (304) and the second geographic entity (308) as recognized by the first geographic entity (304) and not recognized by the second geographic entity (308),
   (ii) a second geographic data record data corresponding to a second location for the boundary as recognized by the second geographic entity (308) and not recognized by the first geographic entity (304); and
   (iii) third geographic data record data corresponding to a third location for the boundary as recognized by a third party, the third location for the boundary being different from the first and second locations for the boundary;
wherein the processor is configured to retrieve a respective one of the first, second and third geographic data records in response to a user selection of an option to view the first geographic entity with a respective one of the first, second and third locations for the boundary; and
wherein the processor is configured to retrieve the first, second and third geographic data records in response to a user selection of an option to view the first geographic entity with the first, second and third locations for the boundary.

In one embodiment, the geographic database further includes a first name associated with the geographic data record and a second name associated with the geographic data record.

In one embodiment, the processor is further configured to retrieve the first name associated with the geographic data record in response to the user selection.

The geographic data record may represent a point of interest.

The geographic data record may represent part of a country, state, or city border.

According to an aspect of the invention, there is provided a computer-implemented method of operating a navigation system to provide different views of disputed territories, the method comprising:
identifying a first data record that represents a geographic feature accepted by a first geographic entity but not accepted by a second geographic entity;
providing the first data record for display of the geographic feature accepted by the first geographic entity but not accepted by the second geographic entity;
identifying a second data record that represents a geographic feature accepted by the second geographic entity but not accepted by the first geographic entity; and
providing the second data record for display of the geographic feature accepted by the second geographic entity but not accepted by the first geographic entity,
wherein the first data record and the second data record are stored in a geographic database associated with the navigation system.

In one embodiment, the geographic features represented by the first data record and the second data record respectively comprise at least a part of a geographic boundary.

According to an aspect of the invention, there is provided a computer-implemented method of collecting data for a geographic database for use with a navigation system, the method comprising:
identifying a line segment data record that represents part of a geographic boundary, the line segment data record stored in a geographic database on a computer readable medium;
assigning a designation type to the identified line segment data record, the designation type indicating that the identified line segment data record represents a line that is considered part of a border disputed between a first geographic entity and a second geographic entity; and
storing the designation type in the geographic database on the computer readable medium,
wherein the stored designation type is configured to be selected to include the identified line segment data record as part of a data representation of a border of the first geographic entity that is not recognized by the second geographic entity.

In one embodiment, the first geographic entity comprises a first country and the second geographic entity comprises a second country.

In one embodiment, the first geographic entity comprises a first state or province and the second geographic entity comprises a second state or province.

In one embodiment, the stored designation type is further configured to be selected to include the identified line segment data record as part of a data representation of a border of the second geographic entity that is not recognized by the first geographic entity.

In one embodiment, the method further comprises:
assigning a first name to a point of interest;
assigning a second name to the point of interest; and
storing the first name and the second name in the geographic database on the computer readable medium,
wherein the first name is configured to be selected when including the identified line segment data record as part of the data representation of the border of the first geographic entity that is not recognized by the second geographic entity.

In one embodiment, the point of interest comprises a city.

In one embodiment, the method further comprises:
identifying another line segment data record that represents part of a dividing line between the first geographic entity and the second geographic entity as recognized by a third party entity, the other line segment data record stored in the geographic database on the computer readable medium;
assigning a designation attribute to the other identified line segment data record, the designation attribute indicating that the other identified line segment data record represents a line that is considered part of a border disputed between the first geographic entity and the second geographic entity; and
storing the designation attribute in the geographic database on the computer readable medium,
wherein the stored designation attribute is configured to be used to exclude the other identified line segment data record as part of the data representation of the border of the first geographic entity that is not recognized by the second geographic entity.

In one embodiment, the third party entity comprises an international body or forum.

According to an aspect of the invention, there is provided a computer-implemented method of collecting data for a geographic database for use with a navigation system, the method comprising:
identifying a data record corresponding to a geographic area disputed between a first geographic entity and a second geographic entity, the data record stored in a geographic database on a computer readable medium;
allocating an indication of dispute to the data record; and
storing the indication of dispute in the geographic database on the computer readable medium,
wherein the stored indication of dispute is configured to be identified when providing a data representation of the first geographic entity that is not recognized by the second geographic entity.

In one embodiment, the data record represents a polygon or a link.

In one embodiment, the data record represents part of a country or state border.

In one embodiment, the data record represents a point of interest.

In one embodiment, the stored indication of dispute is configured to be identified when providing a data representation of the second geographic entity that is not recognized by the first geographic entity.

In one embodiment, the stored indication of dispute is configured to be identified when providing a data representation of the first geographic entity and the second geographic entity as recognized by a third party entity.

In one embodiment, the third party entity comprises an international body.

According to an aspect of the invention, there is provided a computer-implemented method of collecting data for a geographic database for use with a navigation system, the method comprising:
associating a first name to a geographic data record, the geographic data record stored in a geographic database on a computer readable medium;
associating a second name to the geographic data record, the geographic data record corresponding to a geographic area disputed between a first geographic entity and a second geographic entity; and
storing the first name and the second name in the geographic database on the computer readable medium,
wherein the first name is configured to be selected when using the geographic data record in a data representation of the first geographic entity that is not recognized by the second geographic entity.

In one embodiment, the first name comprises a plurality of letters representing a name of a city used by the first geographic entity that are not used by the second geographic entity.

In one embodiment, the second name is configured to be selected when using the geographic data record in a data representation of the second geographic entity that is not recognized by the first geographic entity.

According to an aspect of the invention, there is provided a computer-implemented method of collecting data for a geographic database for use with a navigation system, the method comprising:
identifying a data record that represents at least a part of a geographic boundary, the data record stored in a geographic database on a computer readable medium;
assigning an indication of dispute to the identified data record, the indication of dispute representing that the identified data record corresponds to a border disputed between a first geographic entity and a second geographic entity; and
storing the indication of dispute in the geographic database on the computer readable medium.

In one embodiment, the data record comprises a link data record.

According to an aspect of the invention, there is provided a computer-implemented method of collecting data for a geographic database for use with a navigation system, the method comprising:
identifying a first data record that represents a geographic feature accepted by a first geographic entity but not accepted by a second geographic entity;
identifying a second data record that represents a geographic feature accepted by the second geographic entity but not accepted by the first geographic entity; and
storing the first data record and the second data record in the geographic database.

In one embodiment, the geographic features represented by the first data record and the second data record respectively comprise at least a part of a geographic boundary.

According to one aspect, a computer-implemented method of operating a navigation system to provide views of disputed territories is provided. For example, the method includes providing, in a geographic database, a data record corresponding to a geographic area disputed between a first geographic entity and a second geographic entity. The data record is associated with an indication of dispute. The data record is retrieved from the geographic database as a function of the indication of dispute to generate a representation of the first geographic entity that is not recognized by the second geographic entity. The representation of the first geographic entity is displayed.

The present invention is defined by the following claims, and nothing in this section should be taken as a limitation on those claims. Further aspects and advantages of the invention are discussed below in conjunction with the preferred embodiments.

### BRIEF DESCRIPTION OF THE DRAWINGS

Figure 1 is a diagram of a geographic data and/or navigation system corresponding to disputed territories.
Figure 2 illustrates data components of a geographic database used in the system of Figure 1.
Figure 3 illustrates a data representation of a geographic area including disputed boundaries.
Figure 4 illustrates one embodiment of a navigation and/or geographic device providing viewing options.
Figure 5 illustrates a graphical representation of the geographical area of Figure 3 as recognized by a first geographic entity.
Figure 6 illustrates a graphical representation of the geographical area of Figure 3 as recognized by a second geographic entity.
Figure 7 illustrates a graphical representation of the geographical area of Figure 3 as recognized by a third party.
Figure 8 is a flowchart of a method of collecting data for a geographic database for use with a navigation system.
Figure 9 is a flowchart of a method of operating a navigation system to provide views of disputed territories.

### DETAILED DESCRIPTION OF THE PRESENTLY PREFERRED EMBODIMENTS

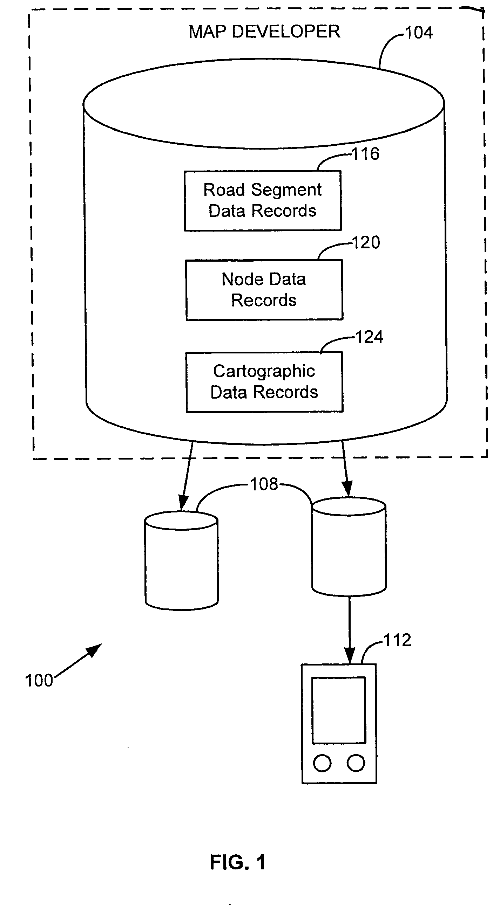

Figure 1 shows one embodiment of a geographic data and/or navigation system 100 corresponding to disputed territories. The system 100 includes, but is not limited to, a geographic or navigation database 104, compiled navigation or geographic databases 108, and an end user device 112. Additional, fewer, or different components may be provided. For example, a processor, a server, a base station, transceiver and/or broadcasting components, a router, a switch or intelligent switch, computers or workstations, administrative components, a gateway device, a backbone, ports, network connections and/or components, and network interfaces may be provided.

The map or navigation database 104 may be a master geographic or navigation database that contains data that represent geographic features in a coverage area. The coverage area may correspond to an entire country, such as the United States. Alternatively, the coverage area may correspond to several countries, such as the United States, Canada, Mexico; France, Germany, Italy, Greece, Turkey, Cyprus; Israel, Lebanon, Jordan; India, Pakistan, China; and so on. According to another alternative, the coverage area may represent only a single region within a geographic area, such as a country, state, province, or city.

In one embodiment, the geographic or map database 104 includes data used for navigation-related services. For example, the geographic database 104 includes road segment data records 116, node data records 120, and cartographic ("carto") data records 124. Other data records such as, but not limited to, routing data, maneuver data, and POI data may also be included.

The road segment data records 116 are links or segments representing roads, streets, or paths. The node data records 120 are end points corresponding to the respective links or segments of the road segment data records 116. The road segment data records 116 and the node data records 120 represent a road network, such as used by vehicles, cars, and/or other entities. Alternatively, the geographic database 104 contains path segment and node data records or other data that represent pedestrian paths in addition to or instead of the vehicle road record data.

The road segments and nodes may be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, etc. The geographic database 104 may include data about the locations of these POIs. The geographic database 104 may also include data about places, such as cities, towns, or other communities, and other geographic features, such as bodies of water, mountain ranges, etc. Such place or feature data may be POI data or may be associated with POIs or POI data (such as a data point used for displaying or representing a position of a city). The geographic database 104 may include other kinds of information.

The carto data records 124 contain geographic feature information that is used to display image representations (such as maps) of various portions of a geographic region represented by the geographic database 104. The carto data records 124 are links or segments or polygons that represent geographic features other than roads or paths. For example, the links or link segment data records may represent a country boundary or border, a state boundary or border, a province boundary or border, a county boundary or border, a city or township boundary or border, a river, a lake, a landmark, and/or other geographic features. The carto data records 124 may be associated with position or location information, such as geographic coordinates (*e.g*., latitude, longitude, and/or altitude) as well as with POI data or other data.

In one embodiment, the carto data records 124 contain data related to disputed territories. For example, different disputed country boundaries or other disputed geographic boundaries may be included in the carto data records 124 so that geographic regions or countries may be able to be represented differently based on a certain geographic entity's or country's point of view or acceptance (or the lack thereof) of geographic borders. Also, other disputed geographic features or data may also be included, such as disputed POIs.

The geographic database 104 may be maintained by a map, geographic, and/or navigation data developer, such as NAVTEQ North America, LLC located in Chicago, Illinois. The map developer collects geographic data to generate and enhance the database 104. There are different ways used by the map developer to collect data. These ways include obtaining data from other sources, such as municipalities or respective geographic authorities. In addition, the map developer may employ field personnel to travel by vehicle along roads throughout the geographic region to observe features and/or record information about them. Also, remote sensing, such as aerial or satellite photography, may be used. The data collected by the map developer are stored in the geographic database 104.

The master geographic database 104 may be stored in a format that facilitates updating, maintenance, and development. For example, the master geographic database 104 or data in the master geographic database 104 is in an Oracle spatial format or other spatial format, such as for development or production purposes. The Oracle spatial format or development/production database may be compiled into a delivery format, such as a GDF format. The data in the production and/or delivery formats may be compiled or further compiled to form geographic database products or databases 108, which may be used in end user navigation devices or systems.

For example, geographic data is compiled (such as into a PSF format) to organize and/or configure the data for performing navigation-related functions and/or services, such as route calculation, route guidance, map display, speed calculation, distance and travel time functions, and other functions, by a navigation device. The navigation-related functions may correspond to vehicle navigation, pedestrian navigation, or other types of navigation. The compilation to produce the databases 108 may be performed by a party or entity separate from the map developer. For example, a customer of the map developer, such as a navigation device developer or other end user device developer, may perform compilation on a received geographic database in a delivery format to produce one or more compiled navigation databases 108.

In one embodiment, one or more of the compiled navigation databases 108 may be used with or included in the end user device 112. The end user device 112 is an in-vehicle navigation system, a personal navigation device ("PND"), a portable navigation device, a cellular telephone, a mobile phone, a personal digital assistant ("PDA"), a watch, a computer, and/or other device that can perform navigation-related functions, such as digital routing and map display. In one embodiment, the navigation device 112 is a cellular telephone, such as a cellular telephone provided by Nokia Corporation located in Espoo, Finland. An end user uses the device 112 for navigation functions such as guidance and map display. In one embodiment, the end user may operate the end user device 112 to provide multiple views of a country or geographic region based on disputed borders or boundaries as recognized by the respective geographic entities or countries in dispute. For example, the end user device 112 may display a geographic border of a region as recognized by a first country as well as display a different geographic border of the same region as recognized by a second country yet not recognized by the first country.

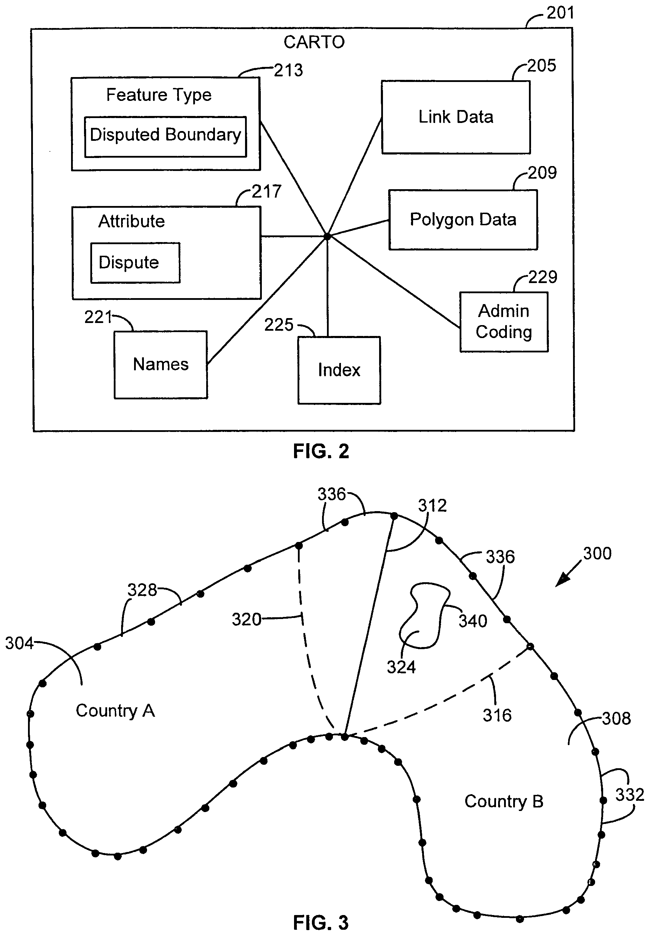

Figure 2 illustrates data components of carto data records 201, which are similar to or the same as the carto data records 124. The carto data records 201 include link data 205, polygon data 209, feature type data 213, attribute data 217, names data 221, an index 225, and administrative coding 229. More, fewer, or different components or data may be provided. Some or all of the carto data records 201 are configured or adapted to be identified, selected, and/or retrieved for data representation or display as well as other functions. While the components in Figure 2 are shown as separate from one another, one or more of these components may be combined.

The link data 205 include links, segments, or link data records that represent different geographic features. For example, a link or segment record is a linear section that represents a part or portion of a river, lake, boundary or border of a geographic entity or region, and other geographic features. The polygon data 209 include data records representing closed polygons that represent geographic features. For example, a polygon may represent an outline or boundary of a city, lake, landmark, or other geographic feature. In an alternative embodiment, the polygon may be a series of connected links or segments.

The link data 205 and/or the polygon data 209 may be associated with or assigned an indication or designation of dispute. An indication of dispute may be an indicator that can be used to identify or use link or polygon data when presenting disputed territories for different viewpoints or recognitions of disputed areas. The indication may be one or more data bits, data flags, numbers, or other indicator.

In one embodiment, indications or designations of dispute may include the feature type 213 and the attribute 217. Other indications of dispute may also be used. The feature type 213 is a new category, type, or designation used in classifying different types of carto links or polygons. For example, current types may include country border or boundary, state border or boundary, river, etc. The feature type 213 is a new type corresponding to a disputed country border or boundary or other disputed border or boundary. Accordingly, all or some of the links or polygons that represent a border or boundary in dispute are assigned the feature type 213 (a disputed border or boundary type). The disputed feature type 213 may be a code, a numerical representation, binary data, a data flag, or other indicator. In one embodiment, the number sequence or value 907197 is used to represent a disputed country boundary, and the number sequence or value 909997 is used to represent a disputed state boundary. A state may mean different regions depending on the usage. For example, in the U.S., a state is one of the 50 states or controlled area, and in foreign countries, a state may be a province or other geographic entity. The disputed feature type 213 may be used to identify corresponding links when determining to include or exclude the respective border for display.

The attribute or designation attribute 217 corresponds to an attribute of dispute assigned to one or more links or polygons. For example, instead of or in addition to creating new feature types, attributes 217 are used to assign an indication of dispute to a respective carto record. In one embodiment, some or all internationally recognized or accepted borders that are in dispute between multiple countries may be assigned the attribute of dispute 217. For example, a dividing line, accepted by an international entity (such as the United Nations ("U.N.")), between two countries may be assigned the attribute of dispute 217. In this case, the attribute of dispute may be referred to as a line of control or other name. The attribute of dispute 217 or line of control may be used to identify corresponding links when determining to include or exclude the border (such as the dividing line) for display.

The attribute of dispute 217 may also be used or assigned to disputed geographic features, areas, or POIs within borders. For example, rivers, cities, lakes, and/or other geographic features within geographic borders or boundaries may be in dispute between multiple geographic entities. Accordingly, the links or polygons representing these features may be assigned the attribute of dispute 217. For example, a polygon or line segments representing an outline of a city, lake, POI, or other geographic feature within a country or state border may be attributed to be in dispute. In one embodiment, the attribute "claimed by" may be used. Respective links, polygons, or other features in dispute may be associated with the attribute "claimed by" for a specific geographic entity. For example, when map display is requested for a geographic region as recognized or accepted by a geographic entity, the links, polygons, and/or other features associated with the "claimed by" attribute for that geographic entity are identified and retrieved for display.

The attribute of dispute 217 may also include a "controlled by" attribute. The "controlled by" attribute is assigned to links, polygons, or other features representing geographic features within disputed borders that are not "claimed by" an outside country or geographic entity. An international entity, such as the U.N., may recognize a geographic feature (such as a lake or city) to be under the control of one country in a disputed area, but the geographic feature may not be "claimed by" other countries or even the country it is deemed under control by the U.N. This attribute of dispute is used to exclude data for map display. For example, a polygon or line segments representing an outline of a city, lake, or other geographic feature within an area of dispute that is not considered to be a part of a specific country or geographic entity as recognized by that specific country or geographic entity may be attributed with the attribute "controlled by," such as controlled by a different country or entity. When map display is requested for a geographic region as recognized by the specific country or geographic entity, the links, polygons, or points associated with the "controlled by" attribute are identified and/or excluded for display.

The carto data records 201 also include the names data 221. The names data 221 are data representing different names for a specific geographic feature, such as a geographic area, POI, city, lake, river, and/or other geographic feature. For example, if a city is in a disputed area, one country may call or use a name for the city and another country may call or use a different name for the city. Accordingly, the names data 221 corresponds to the different names used for the geographic features in dispute. Also, the names themselves may be considered geographic features. The names data 221 may be a plurality or a sequence of letters or symbols used by respective different geographic entities that are associated or attributed with respective links, polygons, points, or features. The names data 221 may also be POI data. Also, road segments or road data records may be associated with different names regarding disputed areas. For example, one geographic entity may call a road by a name, and another geographic entity may call the same road by a different name.

The index 225 may be one or more indices or data structures that organizes and/or links the different carto data with each other. The administrative coding 229 is a hierarchy used when processing the carto data. The administrative coding 229 may be part of or included with the index 225 or may be separate. For any given geographic region, a hierarchy of administration is associated with it. For example, a town is associated with a county, the county is associated with a state or province, and the state or province is associated with a country. Accordingly, every link or polygon is associated with the administrative coding 229. In one embodiment, the left side and right side of a link or segment (and/or the inside and outside of a polygon) is associated with a hierarchy, such as the lowest admin entity to the highest admin entity. For example, the right side of a link may be in a neighborhood, which is in a city, which is in a county, which is in a state or province, which is in a country. This hierarchy is used to process the carto data for different functions and features as well as maintain an organized data structure.

The administrative coding 229 may be modified or enhanced when dealing with disputed territories. A zone is used as a lowest level in the hierarchy when an area or region is not considered a traditional admin level. For example, Flushing, New York is in Queens, and so a zone may be used to represent Flushing. The zone feature may be used to create an alternative hierarchy for a disputed area. For example, a link may be associated with a border in dispute. From an internationally or U.N. accepted point of view, the right side of the link may have the following hierarchy: a first city, a first state or province, and a first country. However, the zone feature may be used to create an alternative hierarchy. For example, a zone may be associated with the right side of the link, and the zone may be referred to as a disputed area zone. The disputed area zone represents that this link is part of an alternate hierarchy based on the disputed area. Accordingly, the disputed area zone may be used to identify the following alternate hierarchy: a second city, a second state or province, and a second country. Accordingly, when building up the map for the disputed area, the original admin hierarchy may be used to display the area as recognized by the first country, and the disputed area zone may be used to identify the alternate hierarchy to display the area as recognized by the second country. One or more disputed area zones may be used. Also, the disputed area zone may be considered as an indication of dispute.

Figure 3 illustrates a data representation of a geographic or geographical area 300 including disputed boundaries. The geographic area 300 includes a geographic entity 304 and a geographic entity 308. In one embodiment, the geographic entity 304 is country A and the geographic entity 308 is country B. According to an international body or forum, such as the U.N., country A and country B are divided by border 312. However, country A recognizes or accepts border 316 as the boundary between country A and country B, and country B recognizes or accepts border 320 as the boundary between country B and country A. However, country A does not recognize or accept border 320 as the boundary between country B and country A, and country B does not recognize or accept border 316 as the boundary between country A and country B. More than two geographic entities in dispute and their disputed features may be provided.

To address the disputed area, types and attributes of dispute as well as other data corresponding to disputed areas or features are assigned and stored in the geographic database 104. For example, the line 312 or line segments thereof are attributed with an indication of dispute, such as the line of control attribute. The links corresponding to the border 316 are assigned a disputed country boundary type, such as the feature type 213. The disputed country boundary for the 316 border is associated with country A. In one embodiment, the "claimed by" attribute may be used to associate the disputed country boundary for the 316 border with country A, or the "claimed by" attribute may not be used. The links corresponding to the border 320 are assigned a disputed country boundary type, such as the feature type 213. The disputed country boundary for the 320 border is associated with country B. In one embodiment, the "claimed by" attribute may be used to associate the disputed country boundary for the 320 border with country B, or the "claimed by" attribute may not be used. Also, the links 336 are designated or associated with the disputed country boundary type and/or an attribute of dispute. In one embodiment, the links 336 are shared by both country A and country B. Meaning, the links 336 are used to display or represent country A as recognized by country A (not recognized by country B), and the links 336 are also used to display or represent country B as recognized by country B (not recognized by country A).

The geographic feature or POI 324 *(e.g.,* a city 324 or lake 324) may also be assigned an attribute of dispute, such as the attribute 217. For example, the "claimed by" attribute may be assigned to the polygon or links 340 or point representing the geographic feature 324. The geographic feature 324 may be "claimed by" both country A and country B. In an alternative embodiment, if country A does not recognize the geographic feature 324 as part of country A, the attribute "controlled by" country B may be used to exclude the geographic feature 324 when building the map as recognized by country A.

Also, different names for geographic features in dispute, such as the geographic feature 324, may be assigned, and the administrative coding may be modified or enhanced to include alternate or dispute hierarchies. However, the line segments or links, polygons, or other features not in dispute, such as the links 328 and the links 332, are not altered or attributed. By assigning and using indications of dispute, a geographic area in dispute may be represented or displayed in different ways by recognizing the different borders and features in dispute. Also, this embodiment minimizes redundancy of data by avoiding storage of multiple versions of full map data (such as redundant links) as respectively recognized by different geographic entities or forums. However, storing multiple copies of geographic areas in dispute as recognized by different entities may be utilized.

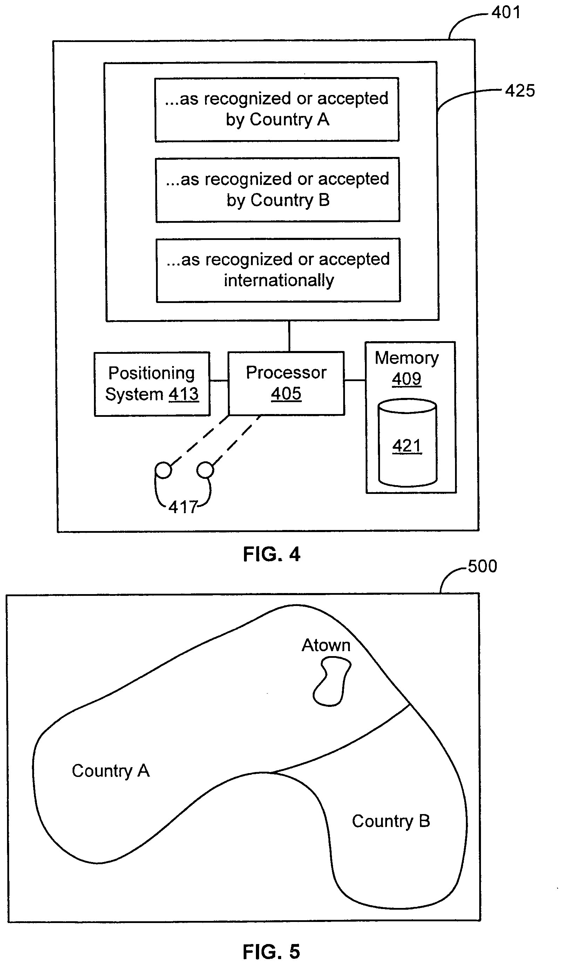

Figure 4 illustrates one embodiment of a navigation and/or geographic device 401, such as the end user device 112. The navigation device includes, but is not limited to, a processor 405, a memory 409, a positioning system or device 413, input buttons or device 417, and a display or user interface 425. Additional, fewer, or different components may be provided. For example, wireless transmitter and receiver components (such as an antenna) may be provided, and wired connections and ports may be provided. Audio components may be provided as well. While the components in Figure 4 are shown as separate from one another, one or more of these components may be combined.

The processor 405 is a general processor, application-specific integrated circuit ("ASIC"), digital signal processor, field programmable gate array ("FPGA"), digital circuit, analog circuit, or combinations thereof. The processor 405 may be one or more processors operable to control and/or communicate with the various electronics and logic of the device 401. The processor 405 is configured to execute functions and controls regarding the disputed territory data and logic.

The memory 409 is in communication with the processor 405. The memory 409 is any known or future storage device. The memory 409 is a non-volatile and/or volatile memory, such as a Random Access Memory "RAM" (electronic), a Read-Only Memory "ROM" (electronic), or an Erasable Programmable Read-Only Memory (EPROM or Flash memory). A memory network may be provided. The memory 409 may be part of the processor 405. The memory 409 includes or is in communication with a geographic or navigation database, such as the database 108. The memory 409 may also include a software application corresponding to the logic and functions of providing options and different views of geographic areas in dispute.

The positioning system 413 is also in communication with the processor 405. The positioning system 413 is a global positioning satellite ("GPS") system, one or more mechanical and/or electrical sensors, one or more gyroscopes, a local positioning system, one or more direction sensors, or other system or device for providing position data, such as location data (e.g., longitude, latitude, and/or altitude) and/or direction data, of the device 401. The input device 417 is one or more buttons used to make selections on or input data or commands to the device 401. Other input devices such as a keypad, keyboard, mouse, stylist pen, trackball, rocker switch, touch pad, voice recognition circuit, or other device or component for controlling or inputting data may be used.

The display 425 is also in communication with the processor 405. The display 425 is any mechanical and/or electronic display positioned for accessible viewing in, on, or in communication with the device 401. For example, the display 405 is a touch screen, liquid crystal display ("LCD"), cathode ray tube ("CRT") display, or a plasma display. The display 405 may act as a hardware implementation of a user interface or a portion thereof.

In one embodiment, the display or user interface 425 displays or provides different options on how to view a geographic area in dispute. For example, the display 425 provides a selectable list format option. The options include viewing the geographic area, such as the area 300, as recognized or accepted by country A, as recognized or accepted by country B, or as recognized or accepted internationally (such as by the U.N.). Other options may be provided. For example, viewing country A as recognized by country A or country B, viewing country B as recognized by country B or country A, viewing country A or B as recognized internationally, viewing country A or B or the area with all disputed borders or features as well as internationally recognized borders or features, or a mixture thereof. An end user may select one of the options, such as via a touch screen function or input button, to view the geographic area from the specific point of view or recognition.

Figure 5 illustrates a data and/or graphical representation 500 of the geographic area 300 as recognized by country A. For example, an end user selects the option corresponding to viewing the area from the point of view of country A. Accordingly, the links associated with the disputed country border associated with country A are identified and obtained for display. Also, features "claimed by" country A are indentified and obtained for display. For example, the geographic feature 324 is displayed as a city in country A. The name "Atown" (recognized by country A but not country B) is retrieved and displayed. In an alternative embodiment, if the geographic feature 324 was attributed with "controlled by" country B, the feature 324 would have been excluded from the display. Furthermore, the line of control attribute is used to exclude the internationally recognized dividing line. All of the links and carto records not in dispute are identified and used as normal. The database 421 is used to identify and obtain respective data records based on the associated attributes or feature types.

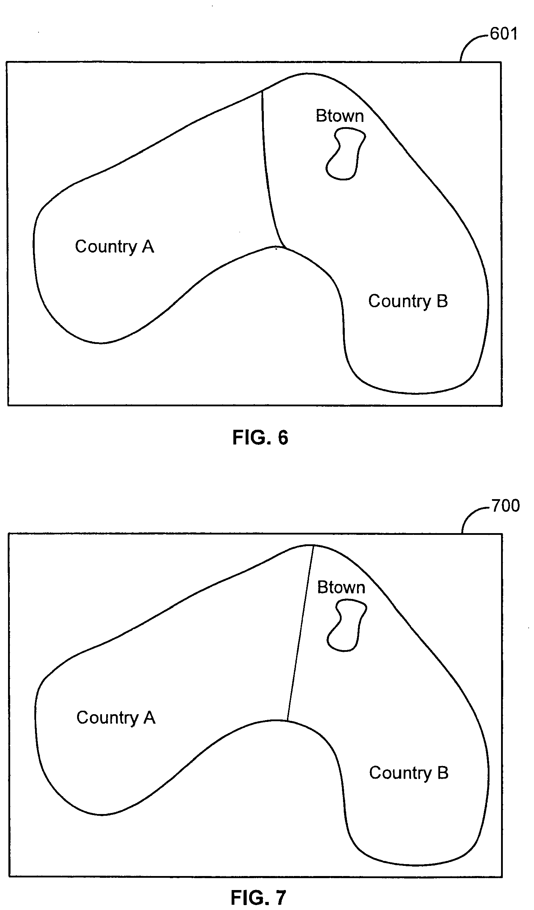

Figure 6 illustrates a data and/or graphical representation 601 of the geographic area 300 as recognized by country B. For example, an end user selects the option corresponding to viewing the area from the point of view of country B. Accordingly, the links associated with the disputed country border associated with country B are identified and obtained for display. Also, features "claimed by" country B are indentified and obtained for display. For example, the geographic feature 324 is displayed as a city in country B. The name "Btown" (recognized by country B but not country A) is retrieved and displayed next to the feature 324. Furthermore, the line of control attribute is used to exclude the internationally recognized dividing line. All of the links and carto records not in dispute are identified and used as normal. The database 421 is used to identify and obtain respective data records based on the associated attributes or feature types.

Figure 7 illustrates a data and/or graphical representation 700 of the geographic area 300 as recognized internationally or by an international forum or body, such as the U.N. For example, an end user selects the option corresponding to viewing the area from the point of view of an international forum. Accordingly, the links associated with the disputed country border type are identified and excluded for display. However, the links and geographic features (including name data) that are in dispute (including attributions or indications of dispute) but are also recognized internationally are identified and obtained for display. Furthermore, the line of control attribute is used to include the internationally recognized dividing line. All of the links and carto records not in dispute are identified and used as normal. The database 421 is used to identify and obtain respective data records based on the associated attributes or feature types.

Other displays or options may be provided. For example, a display including all of the disputed borders and internationally recognized borders (such as shown in Figure 3) may be provided as an option and displayed. Also, disputed borders and features of more than two geographic entities may be generated and displayed (such as a screen shot of an area including three or more geographic entities in dispute). Regarding the different displays, a variety of colors, patterns, highlights, and other features may be used to represent and show the different areas and features in dispute as well as other map graphics.

Alternatively, instead of or in addition to providing different options of viewing to an end user, the device 401 may include a default preference when showing areas in dispute, and an end user may have to manually change the default if desired. For example, the end user may input a preference on how to view geographic areas in dispute. Furthermore, location or position information (as obtained by the positioning system 413) may be used in deciding on how to display a geographic area in dispute. For example, if the device 401 is in country A, then the device 401 may display the geographic area as recognized by country A. If the device 401 is in country B, then the device 401 may display the geographic area as recognized by country B. If the device 401 is in neutral territory or a third country, then the device 401 may display the geographic area as recognized internationally. Also, the location information may be used to disable features. For example, if approaching a border or a dividing line between countries or geographic entities, the current configuration may be disabled and a neutral view of the area may be displayed, or map display may be disabled or turned off.

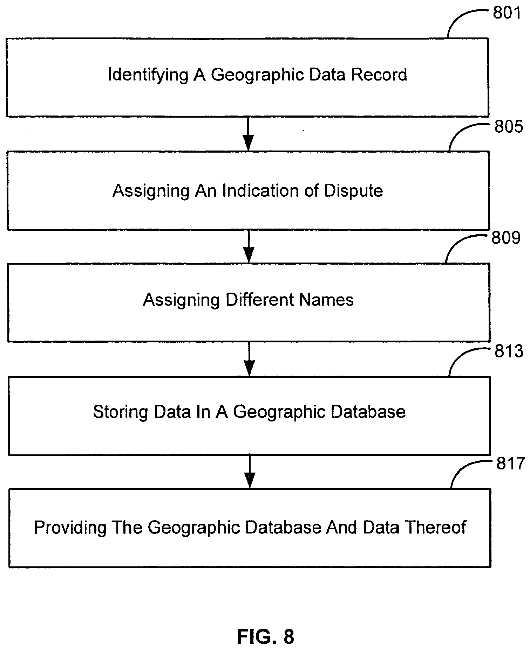

Figure 8 is a flowchart of a method, such as a computer-implemented method, of collecting data for a geographic database, such as the database 104, for use with a navigation system. Fewer or more steps or acts may be provided, and a combination of steps may be provided. Also, the steps or acts may be performed in the order as shown or in a different order. The method is implemented by the system and/or devices described herein or by different devices or systems.

In one embodiment, a map developer enhances or generates a geographic database, such as the database 104, with disputed territory features or data. For example, one or more geographic data records, such as carto data records, are identified (Step 801). The map developer or personnel or computers thereof may use manual and/or automated computer techniques to identify data records associated with a disputed area. The data records may be indentified within the database 104 or a separate database or file. For example, data records such as links corresponding to boundaries or borders in dispute are identified or selected. Also, links, polygons, or points associated with a feature or POI in an area of dispute are identified.

An indication of dispute is assigned, designated, or allocated to the identified data records (Step 805). For example, some links associated with disputed borders between multiple geographic entities are assigned a feature type or designation type indicating dispute, such as the feature type 213. Also, other links or polygon data or other feature data are assigned an attribute of dispute, such as the attribute 217. For example, "claimed by," "controlled by," and line of control attributes may be assigned. Furthermore, a disputed zone area may be assigned or created to provide alternate hierarchies in administrative coding, such as the admin coding 229, for building up maps for display.

Different name data, such as the name data 221, may be assigned to respective links, polygons, POIs, and/or geographic features (Step 809). For example, a city or other POI or feature may have a different name associated with it depending on what country or geographic entity recognizes or accepts it as part of its authority. Accordingly, different names or letter/symbol sequences may be allocated to a specific geographic region, feature, POI, and/or links or data thereof. The different names are associated with a different geographic entities claiming or recognizing the respective name.

The different names, indications of dispute (such as attributes of dispute, feature types of dispute, and disputed zone areas), and/or other assigned or allocated data are stored in the geographic or navigation database 104 (Step 813). The names, indications of dispute, and other assigned data may be linked or associated with respective links/segments, polygons, or points via an index, such as the index 225, or other data structures or files.

The geographic database and data thereof is provided (Step 817). For example, a delivery format of the database 104 is provided to device manufactures or developers. The database may be provided electronically via wireless and/or wired connections or may be provided in a hardware format, such as in a CD, DVD, or other storage medium. In one embodiment, the device developer compiles the received database to produce a navigation database product, such as the database 108. The compiled database product is used with or included in an end user device, such as the device 112 or the device 401. The device developer may choose to compile the received database to produce a database product that has the option of using different attributes and indications of dispute to generate different representations of geographic areas in dispute. However, the device developer may choose to compile the received database to provide a database product having only one data structure regarding a disputed area in which one will not be able to choose different views of disputed territories. Also, the map developer may provide data of a geographic region to a customer or third party without the option (or data representing the options) to choose different views or representations of disputed territories.

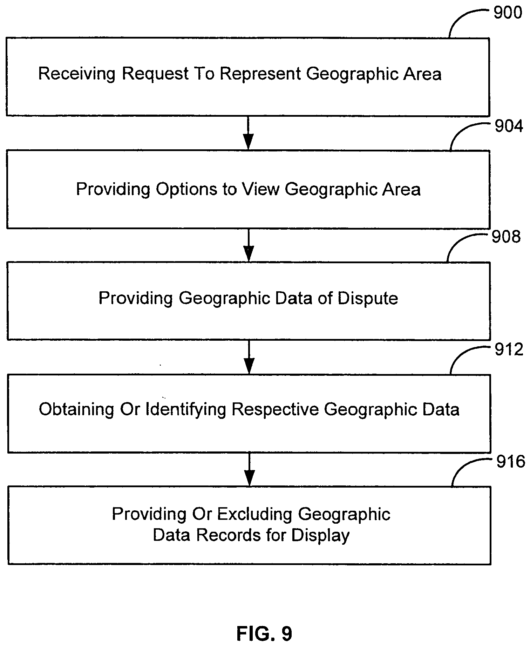

Figure 9 is a flowchart of a method, such as a computer-implemented method, of operating a navigation system to provide views of disputed territories. Fewer or more steps or acts may be provided, and a combination of steps may be provided. Also, the steps or acts may be performed in the order as shown or in a different order. The method is implemented by the system and/or devices described herein or by different devices or systems.

In one embodiment, an end user uses a device, such as the device 112 or the device 401, to view a map and/or utilize navigation related functions. The end user may have the ability or option to enable or disable a disputed territory viewing feature or application. For example, the end user decides to view, such as for map guidance or display, a geographic area in dispute while a disputed territory feature or application is enabled. The end user device receives a request, such as a data request in response to the end users map guidance or display request, to represent the geographic area in dispute (Step 900).

The end user device provides options to view the geographic area (Step 904). For example, a user interface, such as the user interface 425, of the device shows selectable options icons to choose from. The list of options (as illustrated in Figure 4) give the end user the option to view the geographic area as recognized by a certain geographic entity or body. The presentation of options may be different, such as using symbols or flags of different countries or entities or having other display options. In an alternative embodiment, a preference entered by the end user may be used instead of a list of options. Also, the device may choose to display the geographic area in dispute as recognized by a certain geographic entity or forum based on the location of the device. Any other feature or option to view the geographic area from different disputed points of view may be used.

The geographic data, such as the carto records and associated indications of dispute and/or other data, corresponding to the geographic area to be displayed are provided (Step 908). For example, the feature type, attribute data, zone data, name data, associated links or polygons, and/or other data may be in a database, such as the database 108 or 421, installed or included in the end user device. Alternatively, the data may be in a server or computer separate from the end user device.

When a specific option or selection to view the geographic area as recognized or accepted by a geographic entity is selected, the respective data is identified or obtained (Step 912). For example, the indications of dispute are used to identify links, polygons, and/or points as well as associated data (such as name data) when determining how to represent the geographic area in dispute. The respective data is identified or obtained from the included database or imported from a separate server or computer via a wireless and/or wired connection or network. The identified or obtained data is provided or excluded for display on the end user device (Step 916). For example, based on the specific feature types, attributes of dispute, name data, disputed zone area, and other indications of dispute, certain links, polygons, points and/or other data (such as text) may be included or excluded when displaying the geographic area as recognized by a certain geographic entity, as illustrated by Figures 5-7. As an example, the table below illustrates some logic for inclusion and exclusion of data for representation and/or display.

| | **Country(907196) Link with no Line of Control attribute** | **Country(907196) Link with Line of Control = Y** | **Disputed Country (907197)** |
|---|---|---|---|
| **Create a Country product 'A'** | Include, with Named Place ID for `A' | Exclude | Include with Named Place ID for `A' |
| **Create a Country product 'B'** | Include, with Named Place ID for 'B' | Exclude | Include, with Name Place ID for 'B' |
| **Create a Multi-country product** | Include | Include | Include |
| **showing disputed border** | | | |
| **Create a Multi-country product not showing disputed border** | Include | Include | Exclude |

### Alternatives

In the description above, land borders or boundaries in dispute are focused on in the examples. However, the features discussed above may also apply to boundaries of bodies of water in dispute amongst multiple geographic entities.

Furthermore, some of the examples above concentrate on navigation systems. However, the features discussed above may be used in other systems, such as video game systems and other systems or methods that utilize geographic data.

Other methods and systems may be provided based on the descriptions herein. For example, a product-by-process method may be provided as well as a variety of system embodiments.

The logic, data, software, or instructions for implementing the systems, processes, methods and/or techniques discussed above are provided on computer-readable storage media or memories or other tangible media, such as a cache, buffer, RAM, removable media, hard drive, other computer readable storage media, or any other tangible media. The tangible media include various types of volatile and nonvolatile storage media. The functions, acts, steps, or tasks illustrated in the figures or described herein are executed in response to one or more sets of logic or instructions stored in or on computer readable storage media. The functions, acts or tasks are independent of the particular type of instructions set, storage media, processor or processing strategy and may be performed by software, hardware, integrated circuits, firmware, micro code and the like, operating alone or in combination. Likewise, processing strategies may include multiprocessing, multitasking, parallel processing and the like. In one embodiment, the instructions are stored on a removable media device for reading by local or remote systems. In other embodiments, the logic or instructions are stored in a remote location for transfer through a computer network or over telephone lines. In yet other embodiments, the logic or instructions are stored within a given computer, central processing unit ("CPU"), graphics processing unit ("GPU") or system.

It is intended that the foregoing detailed description be regarded as illustrative rather than limiting and that it is understood that the following claims are intended to define the scope of the invention.

## Claims

1. A computer-implemented method of operating a navigation system to provide different options in viewing disputed territories, the method comprising:
receiving (900) a request for representing a first geographic entity (304), the first geographic entity associated with an area disputed between the first geographic entity and a second geographic entity (308);
providing (904) a first option to view the first geographic entity with a first location for a boundary (316) between the first geographic entity (304) and the second geographic entity (308) as recognized by the first geographic entity (304) and not recognized by the second geographic entity (308),
providing (904) a second option to view the first geographic entity with a second location for the boundary (320) as recognized by the second geographic entity (308) and not recognized by the first geographic entity, **characterized by** providing (904) a third option to view the first geographic entity with a third location for the boundary (312) as recognized by a third party, the third location for the boundary being different from the first and second locations for the boundary,
providing a fourth option to view the first geographic entity with the first location for the boundary, the second location for the boundary and the third location for the boundary;
obtaining (912) respective data records corresponding to the first, second and/or third location for the boundary from a geographic database depending on whether the first, second, third or fourth option is selected; and
providing (916) the obtained data records for map display.

2. The method of claim 1, wherein obtaining the data records corresponding to the first, second and/or third location for the boundary (316) is based on an attribute or feature type associated with the data records, the attribute or feature type indicating that a respective data record represents part of a border disputed between the first geographic entity (304) and the second geographic entity (308).

3. The method of claim 1, wherein the first geographic entity (304) comprises a first country and the second geographic entity (308) comprises a second country.

4. The method of claim 1, wherein the first geographic entity (304) comprises a first state or province and the second geographic entity (308) comprises a second state or province.

5. The method of claim 1, wherein the third party comprises an international body or forum.

6. A navigation device (112) for providing different options in viewing disputed territories, the device comprising:
a user interface (425) configured to display a geographic area;
a processor (405) in communication with the user interface; and
a geographic database in communication with the processor, the geographic database including geographic data records representing at least part of a disputed area between a first geographic entity (304) and a second geographic entity (308), the geographic data records comprising:
i) a first geographic data record corresponding to a first location for a boundary between the first geographic entity (304) and the second geographic entity (308) as recognized by the first geographic entity (304) and not recognized by the second geographic entity (308),
ii) a second geographic data record data corresponding to a second location for the boundary as recognized by the second geographic entity (308) and not recognized by the first geographic entity (304); and
iii) a third geographic data record data corresponding to a third location for the boundary as recognized by a third party, the third location for the boundary being different from the first and second locations for the boundary;
wherein the processor is configured to retrieve a respective one of the first, second and third geographic data records in response to a user selection of a respective option to view the first geographic entity with a respective one of the first, second and third locations for the boundary, and
wherein the processor is configured to retrieve the first, second and third geographic data records in response to a user selection of an option to view the first geographic entity with the first, second and third locations for the boundary.

7. The device of claim 6, wherein the geographic database further includes a first name associated with the geographic data record and a second name associated with the geographic data record.

8. The device of claim 6, wherein the processor is further configured to retrieve the first name associated with the geographic data record in response to the user selection.

9. The device of claim 6, wherein the geographic data record represents a point of interest.

10. The device of claim 6, wherein the geographic data record represents part of a country, state, or city border.

11. The device of claim 6, wherein the data record comprises a link data record.

12. The device of claim 6, wherein the data record represents a polygon.

13. The device of claim 6, wherein the device is configured to retrieve the first, second or third geographic data record as a function of an indication of dispute associated with the geographic data record.

14. A computer program configured, when run on a navigation system, to:
enable reception (900) of a request for representing a first geographic entity, the first geographic entity associated with an area disputed between the first geographic entity and a second geographic entity (308);
enable provision (904) of a first option to view the first geographic entity with a first location for a boundary (316) between the first geographic entity (304) and the second geographic entity (308) as recognized by the first geographic entity (304) and not recognized by the second geographic entity (308),
enable provision (904) of a second option to view the first geographic entity with a second location for the boundary (320) as recognized by the second geographic entity (308) and not recognized by the first geographic entity,
enable provision (904) of a third option to view the first geographic entity with a third location for the boundary (312) as recognized by a third party, the third location for the boundary being different from the first and second locations for the boundary,
enable provision of a fourth option to view the first geographic entity with the first location for the boundary, the second location for the boundary and the third location for the boundary;
enable obtaining (912) of respective data records from a geographic database depending on whether the first, second, third or fourth option is selected; and
enable provision (916) of the obtained data records for map display.

## Patentansprüche

1. Computerimplementiertes Verfahren zum Betreiben eines Navigationssystems zum Bereitstellen unterschiedlicher Optionen beim Betrachten von umstrittenen Gebieten, wobei das Verfahren Folgendes umfasst:
Empfangen (900) einer Anfrage zum Darstellen einer ersten geographischen Einheit (304), wobei die erste geographische Einheit einer Region zugeordnet ist, die zwischen der ersten geographischen Einheit und einer zweiten geographischen Einheit (308) umstritten ist;
Bereitstellen (904) einer ersten Option zum Betrachten der ersten geographischen Einheit mit einer ersten Position für eine Grenze (316) zwischen der ersten geographischen Einheit (304) und der zweiten geographischen Einheit (308), wie von der ersten geographischen Einheit (304) anerkannt und von der zweiten geographischen Einheit (308) nicht anerkannt;
Bereitstellen (904) einer zweiten Option zum Betrachten der ersten geographischen Einheit mit einer zweiten Position für die Grenze (320), wie von der zweiten geographischen Einheit (308) anerkannt und von der ersten geographischen Einheit nicht anerkannt, **gekennzeichnet durch**
Bereitstellen (904) einer dritten Option zum Betrachten der ersten geographischen Einheit mit einer dritten Position für die Grenze (312), wie anerkannt von einem Dritten, wobei die dritte Position für die Grenze von der ersten und der zweiten Position für die Grenze verschieden ist,
Bereitstellen einer vierten Option zum Betrachten der ersten geographischen Einheit mit der ersten Position für die Grenze, der zweiten Position für die Grenze und der dritten Position für die Grenze;
Erhalten (912) von jeweiligen Datensätzen von einer geographischen Datenbank, die der ersten, zweiten und/oder dritten Position für die Grenze entsprechen, abhängig davon, ob die erste, zweite, dritte oder vierte Option ausgewählt ist; und
Bereitstellen (916) der erhaltenen Datensätze zur Kartenanzeige.

2. Verfahren nach Anspruch 1, wobei Erhalten der Datensätze, die der ersten, zweiten und/oder dritten Position für die Grenze (316) entsprechen, auf einem den Datensätzen zugeordneten Attribut- oder Merkmalstyp basiert, wobei der Attribut- oder Merkmalstyp anzeigt, dass ein jeweiliger Datensatz einen Teil einer zwischen der ersten geographischen Einheit (304) und der zweiten geographischen Einheit (308) umstrittenen Grenze darstellt.

3. Verfahren nach Anspruch 1, wobei die erste geographische Einheit (304) ein erstes Land umfasst und die zweite geographische Einheit (308) ein zweites Land umfasst.

4. Verfahren nach Anspruch 1, wobei die erste geographische Einheit (304) einen ersten Staat oder eine Provinz umfasst und die zweite geographische Einheit (308) einen zweiten Staat oder eine Provinz umfasst.

5. Verfahren nach Anspruch 1, wobei der Dritte eine internationale Körperschaft oder ein internationales Gremium umfasst.

6. Navigationsvorrichtung (112) zum Bereitstellen unterschiedlicher Optionen beim Betrachten von umstrittenen Gebieten, wobei die Vorrichtung Folgendes umfasst:
eine Benutzerschnittstelle (425), ausgelegt zum Anzeigen einer geographischen Region;
einen Prozessor (405) in Kommunikation mit der Benutzerschnittstelle; und
eine geographische Datenbank in Kommunikation mit dem Prozessor, wobei die geographische Datenbank geographische Datensätze beinhaltet, die mindestens einen Teil einer umstrittenen Region zwischen einer ersten geographischen Einheit (304) und einer zweiten geographischen Einheit (308) darstellen, wobei die geographischen Datensätze Folgendes umfassen:
i) einen ersten geographischen Datensatz, der einer ersten Position für eine Grenze zwischen der ersten geographischen Einheit (304) und der zweiten geographischen Einheit (308) entspricht, wie von der ersten geographischen Einheit (304) anerkannt und wie von der zweiten geographischen Einheit (308) nicht anerkannt,
ii) einen zweiten geographischen Datensatz, der einer zweiten Position für die Grenze entspricht, wie von der zweiten geographischen Einheit (308) anerkannt und von der ersten geographischen Einheit (304) nicht anerkannt; und
iii) einen dritten geographischen Datensatz, der einer dritten Position für die Grenze entspricht, wie von einem Dritten anerkannt, wobei die dritte Position für die Grenze von der ersten und der zweiten Position für die Grenze verschieden ist;
wobei der Prozessor dazu ausgelegt ist, einen jeweiligen aus dem ersten, zweiten und dritten geographischen Datensatz in Reaktion auf eine Benutzerauswahl einer jeweiligen Option zum Betrachten der ersten geographischen Einheit mit einer jeweiligen aus der ersten, zweiten und dritten Position für die Grenze abzurufen, und
wobei der Prozessor dazu ausgelegt ist, den ersten, zweiten und dritten geographischen Datensatz in Reaktion auf eine Benutzerauswahl einer Option zum Betrachten der ersten geographischen Einheit mit der ersten, zweiten und dritten Position für die Grenze abzurufen.

7. Vorrichtung nach Anspruch 6, wobei die geographische Datenbank ferner einen ersten dem geographischen Datensatz zugeordneten Namen und einen zweiten dem geographischen Datensatz zugeordneten Namen beinhaltet.

8. Vorrichtung nach Anspruch 6, wobei der Prozessor ferner dazu ausgelegt ist, den ersten dem geographischen Datensatz zugeordneten Namen in Reaktion auf die Benutzerauswahl abzurufen.

9. Vorrichtung nach Anspruch 6, wobei der geographische Datensatz einen Ort von Interesse *(point of interest-* POI) darstellt.

10. Vorrichtung nach Anspruch 6, wobei der geographische Datensatz einen Teil einer Landes-, einer Staats- oder einer Stadtgrenze darstellt.

11. Vorrichtung nach Anspruch 6, wobei der Datensatz einen Verknüpfungsdatensatz umfasst.

12. Vorrichtung nach Anspruch 6, wobei der Datensatz ein Polygon darstellt.

13. Vorrichtung nach Anspruch 6, wobei die Vorrichtung dazu ausgelegt ist, den ersten, zweiten oder dritten geographischen Datensatz als eine Funktion einer Angabe zu einem dem geographischen Datensatz zugeordneten Streit abzurufen.

14. Computerprogramm, zu Folgendem ausgelegt, wenn auf einem Navigationssystem ausgeführt:
Ermöglichen des Empfangs (900) einer Anfrage zum Darstellen einer ersten geographischen Einheit, wobei die erste geographische Einheit einer Region zugeordnet ist, die zwischen der ersten geographischen Einheit und einer zweiten geographischen Einheit (308) umstritten ist;
Ermöglichen der Bereitstellung (904) einer ersten Option zum Betrachten der ersten geographischen Einheit mit einer ersten Position für eine Grenze (316) zwischen der ersten geographischen Einheit (304) und der zweiten geographischem Einheit (308), wie von der ersten geographischen Einheit (304) anerkannt und von der zweiten geographischen Einheit (308) nicht anerkannt,
Ermöglichen der Bereitstellung (904) einer zweiten Option zum Betrachten der ersten geographischen Einheit mit einer zweiten Position für die Grenze (320), von der zweiten geographischen Einheit (308) wie anerkannt und von der ersten geographischen Einheit nicht anerkannt,
Ermöglichen der Bereitstellung (904) einer dritten Option zum Betrachten der ersten geographischen Einheit mit einer dritten Position für die Grenze (312), von einem Dritten wie anerkannt, wobei die dritte Position für die Grenze von der ersten und zweiten Position für die Grenze verschieden ist,
Ermöglichen der Bereitstellung einer vierten Option zum Betrachten der ersten geographischen Einheit mit der ersten Position für die Grenze, der zweiten Position für die Grenze und der dritten Position für die Grenze;
Ermöglichen des Erhaltens (912) von jeweiligen Datensätzen aus einer geographischen Datenbank abhängig davon, ob die erste, zweite, dritte oder vierte Option ausgewählt wird; und
Ermöglichen der Bereitstellung (916) der erhaltenen Datensätze zur Kartenanzeige.

## Revendications

1. Procédé implémenté par ordinateur de fonctionnement d'un système de navigation pour fournir des options de visualisation différentes de territoires contestés, le procédé comprenant :
la réception (900) d'une demande de représentation d'une première entité géographique (304), la première entité géographique étant associée à une zone contestée entre la première entité géographique et une seconde entité géographique (308) ;
la fourniture (904) d'une première option pour visualiser la première entité géographique avec un premier emplacement pour une frontière (316) entre la première entité géographique (304) et la seconde entité géographique (308) tel que reconnu par la première entité géographique (304) et non reconnu par la seconde entité géographique (308),
la fourniture (904) d'une deuxième option pour visualiser la première entité géographique avec un deuxième emplacement pour la frontière (320) tel que reconnu par la seconde entité géographique (308) et non reconnu par la première entité géographique,
**caractérisé par**
la fourniture (904) d'une troisième option pour visualiser la première entité géographique avec un troisième emplacement pour la frontière (312) tel que reconnu par un tiers, le troisième emplacement pour la frontière étant différent des premier et deuxième emplacements pour la frontière,
la fourniture d'une quatrième option pour visualiser la première entité géographique avec le premier emplacement pour la frontière, le deuxième emplacement pour la frontière et le troisième emplacement pour la frontière ;
l'obtention (912) d'enregistrements de données respectifs correspondant aux premier, deuxième et/ou troisième emplacements pour la frontière à partir d'une base de données géographiques selon que la première, deuxième, troisième ou quatrième option est choisie ; et
la fourniture (916) des enregistrements de données obtenus pour un affichage cartographique.

2. Procédé selon la revendication 1, dans lequel l'obtention des enregistrements de données correspondant aux premier, deuxième et/ou troisième emplacements pour la frontière (316) est basée sur un type d'attribut ou de particularité associé aux enregistrements de données, le type d'attribut ou de particularité indiquant qu'un enregistrement de données respectif représente une partie d'une délimitation contestée entre la première entité géographique (304) et la seconde entité géographique (308).

3. Procédé selon la revendication 1, dans lequel la première entité géographique (304) comprend un premier pays et la seconde entité géographique (308) comprend un second pays.

4. Procédé selon la revendication 1, dans lequel la première entité géographique (304) comprend un premier état ou une première province et la seconde entité géographique (308) comprend un second état ou une seconde province.

5. Procédé selon la revendication 1, dans lequel le tiers comprend un organe ou forum international.

6. Dispositif de navigation (112) pour fournir des options de visualisation différentes de territoires contestés, le dispositif comprenant :
une interface utilisateur (425) configurée pour afficher une zone géographique ;
un processeur (405) en communication avec l'interface utilisateur ; et
une base de données géographiques en communication avec le processeur, la base de données géographiques comportant des enregistrements de données géographiques représentant au moins une partie d'une zone contestée entre une première entité géographique (304) et une seconde entité géographique (308), les enregistrements de données géographiques comprenant :
i) un premier enregistrement de données géographiques correspondant à un premier emplacement pour une frontière entre la première entité géographique (304) et la seconde entité géographique (308) tel que reconnu par la première entité géographique (304) et non reconnu par la seconde entité géographique (308),
ii) un deuxième enregistrement de données géographiques correspondant à un deuxième emplacement pour la frontière tel que reconnu par la seconde entité géographique (308) et non reconnu par la première entité géographique (304) ; et
iii) un troisième enregistrement de données géographiques correspondant à un troisième emplacement pour la frontière tel que reconnu par un tiers, le troisième emplacement pour la frontière étant différent des premier et deuxième emplacements pour la frontière ;
dans lequel le processeur est configuré pour récupérer un enregistrement respectif des premier, deuxième et troisième enregistrements de données géographiques en réponse à une sélection utilisateur d'une option respective pour visualiser la première entité géographique avec un emplacement respectif des premier, deuxième et troisième emplacements pour la frontière, et
dans lequel le processeur est configuré pour récupérer les premier, deuxième et troisième enregistrements de données géographiques en réponse à une sélection utilisateur d'une option pour visualiser la première entité géographique avec les premier, deuxième et troisième emplacements pour la frontière.

7. Dispositif selon la revendication 6, dans lequel la base de données géographiques comporte en outre un premier nom associé à l'enregistrement de données géographiques et un second nom associé à l'enregistrement de données géographiques.

8. Dispositif selon la revendication 6, dans lequel le processeur est en outre configuré pour récupérer le premier nom associé à l'enregistrement de données géographiques en réponse à la sélection utilisateur.

9. Dispositif selon la revendication 6, dans lequel l'enregistrement de données géographiques représente un point d'intérêt.

10. Dispositif selon la revendication 6, dans lequel l'enregistrement de données géographiques représente une partie d'un pays, d'un état ou d'une délimitation de ville.

11. Dispositif selon la revendication 6, dans lequel l'enregistrement de données comprend un enregistrement de données de lien.

12. Dispositif selon la revendication 6, dans lequel l'enregistrement de données représente un polygone.

13. Dispositif selon la revendication 6, dans lequel le dispositif est configuré pour récupérer les premier, deuxième ou troisième enregistrements de données géographiques en fonction d'une indication de contestation associée à l'enregistrement de données géographiques.

14. Programme d'ordinateur configuré, lorsqu'il est exécuté sur un système de navigation, pour :
permettre la réception (900) d'une demande de représentation d'une première entité géographique, la première entité géographique étant associée à une zone contestée entre la première entité géographique et une seconde entité géographique (308) ;
permettre la fourniture (904) d'une première option pour visualiser la première entité géographique avec un premier emplacement pour une frontière (316) entre la première entité géographique (304) et la seconde entité géographique (308) tel que reconnu par la première entité géographique (304) et non reconnu par la seconde entité géographique (308),
permettre la fourniture (904) d'une deuxième option pour visualiser la première entité géographique avec un deuxième emplacement pour la frontière (320) tel que reconnu par la seconde entité géographique (308) et non reconnu par la première entité géographique,
permettre la fourniture (904) d'une troisième option pour visualiser la première entité géographique avec un troisième emplacement pour la frontière (312) tel que reconnu par un tiers, le troisième emplacement pour la frontière étant différent des premier et deuxième emplacements pour la frontière,
permettre la fourniture d'une quatrième option pour visualiser la première entité géographique avec le premier emplacement pour la frontière, le deuxième emplacement pour la frontière et le troisième emplacement pour la frontière ;
permettre l'obtention (912) d'enregistrements de données respectifs à partir d'une base de données géographiques selon que la première, deuxième, troisième ou quatrième option est choisie ; et
permettre la fourniture (916) des enregistrements de données obtenus pour un affichage cartographique.
